Europäisches Patentamt

(19) European Patent Office

Office européen des brevets

(11) Publication number : **0 490 619 A1**

## (12) EUROPEAN PATENT APPLICATION

(21) Application number : **91311445.0**

(22) Date of filing : **09.12.91**

(51) Int. Cl.[5] : **A63B 37/00**

(30) Priority : **10.12.90 US 625225**

(43) Date of publication of application :
**17.06.92 Bulletin 92/25**

(84) Designated Contracting States :
**DE FR GB SE**

(71) Applicant : **ACUSHNET COMPANY**
**Belleville Avenue**
**New Bedford, Massachusetts 02745 (US)**

(72) Inventor : **Stefani, Barbara**
**1399 Phillips Road**
**New Bedford,MA 02745 (US)**

(74) Representative : **Carmichael, David Andrew**
**Halliday et al**
**G.F. REDFERN & CO. Marlborough Lodge, 14**
**Farncombe Road**
**Worthing, West Sussex BN11 2BT (GB)**

(54) **Golf ball cover.**

(57)   The golf ball cover is made from about 95 to about 50 parts by weight of a sodium ionomer resin having a low flexural modulus and about 5 to about 50 parts by weight of a lithium ionomer resin. The cover has excellent shear resistance.

EP 0 490 619 A1

This invention relates to golf balls and, more particularly, to a golf ball cover composition comprising a blend of a sodium ionomer resin having a low flexural modulus and a lithium ionomer resin. A golf ball made with the cover composition of the present invention has been found to have good shear resistance and good initial velocity.

Generally, there are three types of golf balls in the market today, namely one-piece, two-piece and wound. One-piece golf balls are molded from a homogeneous mass of material, while two-piece golf balls are made by molding a cover about a solid core. Wound golf balls are made by molding a cover about a wound core. A wound core is prepared by winding thin elastic thread about a center.

Golf ball cores, whether wound or solid, typically measure from 1.4 to 1.6 inches (3.5 to 4.1 cm) in diameter. The cover is molded about the core to form a golf ball having the minimum United States golf Association (USGA) specified diameter of 1.68 inches (4.3 cm). Typically, the cover has a thickness of about 0.04 inches (0.1 cm).

Conventionally, both two-piece and wound golf balls are made by molding covers about cores in one of two ways: by injection molding of fluid cover stock material around a core which is held in a retractable pin mold; or by compression molding preformed half-shells about the core. The preformed half-shells are formed by injecting fluid cover stock material into half-shell molds and solidifying the cover stock material into a half-shell shape.

Balata was the standard cover stock material until the middle 1960's when E.I. DuPont de Nemours and Co. discovered a new species of resins known as ionomers or ionomer resins. These resins are sold under the trademark SURLYN® and, to a large extent, have replaced balata as a cover stock material. Chemically, these ionomer resins are a copolymer of an olefin and an alpha, beta ethylenically unsaturated carboxylic acid with 10-90% of the carboxylic acid groups being neutralized by a metal ion, see U.S. Patent No. 3,264,272. Today, the only commercially available ionomer resins are copolymers of ethylene and methacrylic or acrylic acid. Conventionally, these ionomer resins are distinguished by the type of metal ion, the amount of acid and the degree of neutralization.

Dunlop Rubber Company obtained the first patent on the use of Surlyn for the cover of a golf ball, see U.S. Patent No. 3,454,280 issued July 8, 1969. Since then, there have been a number of disclosures on the use of these ionomer resins in the cover composition of a golf ball. See, for example, U.S. Patent Nos. 3,819,768 issued June 25, 1974; 4,323,247 issued April 6, 1982; 4,526,375 issued July 2, 1985; 4,884,814 issued December 3, 1989; and 4,911,451 issued March 27, 1990.

In November 1986 DuPont introduced a sodium and zinc ionomer resin having a low flexural modulus and suggested using and blending the same with other ionomer resins for making a golf ball cover. Golf ball covers made from these low flexural modulus ionomer resins have good shear resistance but very low velocity.

In December of 1986, DuPont introduced a lithium ionomer resin which was a copolymer of ethylene and methacrylic acid, optionally containing a softening acrylate comonomer. These lithium ionomer resins have a very high flexural modulus, typically about 60,000 psi (415 MPa). DuPont suggested that lithium ionomer resins could be used to produce a golf ball cover which would be more cut resistant and harder than a cover made with either sodium or zinc ionomer resins. DuPont also suggested that a golf ball having a cover made from a lithium ionomer resin would go farther, have a higher coefficient of restitution and be less prone to cutting (i.e. more durable) than a golf ball made from other known ionomer resins, e.g. sodium and zinc ionomer resins and blends thereof. DuPont further suggested that lithium ionomer resins could be used in blends with other ionomer resins where they can impart better cut resistance to these other materials.

The United States Golf Association (USGA) has promulgated a rule that no golf ball shall have an initial velocity that exceeds 255 feet (78 m) per second, i.e. 250 feet (76 m) per second with a 2% tolerance. Golf balls with covers made from ionomer resins with low flexural modulus are woefully below this maximum and, as should be appreciated, all golf ball manufacturers strive to come as close as possible to this limit.

It has now been discovered that the initial velocity of a golf ball which uses a sodium ionomer resin having a low flexural modulus in the cover stock is increased by adding a lithium ionomer resin to the cover stock.

Broadly, the golf ball cover composition of the present invention is a blend comprising: about 95 to about 50 parts by weight based on 100 parts by weight resin (phr) of a low flexural modulus sodium ionomer resin; and about 5 to about 50 phr of a lithium ionomer resin.

Preferably, the amount of low flexural modulus sodium ionomer resin used in the present invention is about 90 to about 70 phr and more preferably about 85 to about 75 phr.

Preferably, the amount of lithium ionomer resin used in the present invention is about 10 to about 30 phr and more preferred about 15 to about 25 phr.

Preferably, the lithium ionomer resin is a copolymer comprising about 95 to about 80 parts by weight of ethylene and about 5 to about 20 parts by weight of acrylic or methacrylic acid, based on 100 parts by weight copolymer. Preferably, the lithium ionomer resin has about 10% to about 90% of the acid groups neutralized by lithium. The metal ion is, obviously, lithium.

Preferably, the sodium ionomer resin is a copolymer comprising about 95 to about 80 parts by weight of copolymer of ethylene and about 5 to about 20 parts by weight of the copolymer of acrylic or methacrylic acid in which about 10% to about 90% of the acid groups are neutralized by sodium. The metal ion is, obviously, sodium.

Preferably, the lithium ionomer resin has a very high flexural modulus which is above about 60,000 psi (415 MPa). More preferably, the lithium ionomer resin used in the present invention has a flexural modulus between about 60,000 and about 80,000 psi (415 and 550 MPa). Good results have been obtained with lithium ionomer resins having flexural moduli in the range of about 60,000 psi to about 70,000 psi (415 to 485 MPa). The flexural modulus is measured in accordance with A.S.T.M. Method D-790.

Preferably, the low flexural modulus sodium ionomer resin used in the present invention has a flexural modulus between about 1,000 and about 20,000 psi (5 and 140 MPa) and, more preferably, between about 2,000 and about 10,000 psi (10 to 70 MPa).

Both the lithium and sodium ionomer resins preferably have about 10% to about 90% of their carboxylic acid groups neutralized by their respective metal ions. More preferably, both the lithium and sodium ionomer resins have their carboxylic acid groups neutralized about 35% to about 65% by the metal ion.

Preferably, the ionomer resins have the same monocarboxylic acid, e.g. either methacrylic or acrylic acid.

To aid in the processing of the fluid cover stock, it is conventional to use a plurality of ionomer resins to obtain the desired characteristics. Conventionally, ionomer resins with different melt flow indexes are employed to obtain the desired characteristics of the fluid cover stock. In order to adjust the characteristics of the fluid cover stock, other ionomer resins besides sodium and lithium can be employed.

Good results have been obtained with a lithium ionomer resin sold under the trade name SURLYN 8118, 7930 and 7940 by DuPont. Sodium ionomer resins sold by DuPont under the name SURLYN 8269 and SURLYN 8265 also work well in the present invention.

SURLYN 8118, 7930 and 7940 have flexural modulus of 61,000, 67,000 and 61,000 psi (420, 460 and 420 MPa) respectively. SURLYN 8269 and SURLYN 8265 have flexural modulus of 2,800 psi (20 MPa) and 7,100 psi (50 MPa), respectively.

SURLYN 8118, 7930 and 7940 have melt flow indexes of about 1.4, 1.8 and 2.6 g/10 min., respectively. SURLYN 8269 and SURLYN 8265 both have a melt flow index of about 0.9 g/10 min.. Melt flow index is measured in accordance with A.S.T.M. Test D 1238, condition E, procedure A. Preferably, the blend of ionomer resins used to make a cover of a golf ball in accordance with the present invention has a melt flow index between about 1 to about 4 g/10 min. and, more preferably, about 1 to about 3 g/10 min.

The combined amount of lithium ionomer resin and sodium ionomer resin used to make a cover in accordance with the present invention as herein described generally makes up at least about 90% by weight of the total weight of the golf ball cover and, preferably, at least about 95% by weight. Additional materials which may be included in the golf ball cover are other SURLYN resins; other resins, such as polybutadiene, polyurethane and polyisoprene; whitening agents such as titanium dioxide; dyes; UV absorbers; optical brighteners; and other additives which are conventionally included in golf ball covers.

Golf ball covers made in accordance with the present invention are made in a conventional manner by molding cover stock about a core. Molding is accomplished either by injection molding cover stock about a core or by compression molding preformed half-shells about a core. The preferred method is compression molding. Half-shells are made by injection molding a cover stock into a conventional half-shell mold in conventional manner at about 570°F (300°C) for about 40 seconds.

The preformed half-shells are then placed about a core and the assembly is introduced into a compression molding machine. The compression molding machine is a hydraulic press having an upper and lower mold plate. As taught by U.S. Patent No. 4,508,309 issued April 2, 1985, such mold plate has half molds, each of which is registered with another half mold in the opposite mold plate. It has been found that a golf ball is formed with a cover in accordance with the present invention when the half-shells are compression molded about a core at about 300°F (149°C) for about 3 minutes. The molded balls are then cooled while still in the mold and finally removed when the cover is hard enough to be handled without deforming.

After the balls have been molded, they undergo various conventional finishing operations such as buffing, painting and stamping.

Preferably, the cover stock used to make a golf ball cover in accordance with the present invention is a blend of the lithium ionomer resin and the sodium ionomer resin in the amounts specified hereinabove. Blending of the ionomer resins is accomplished in a conventional manner using conventional equipment. Good results have been obtained by mixing the ionomer resins in a solid, pelletized form and then placing the mix into a hopper which is used to feed the heated barrel of the injection molding machine. Further mixing is accomplished by a screw in the heated barrel. The injection molding machine is used either to make preformed half-shells for compression molding about a core or for molding flowable cover stock about a core using a retractable-pin mold. Such machines are conventional.

These and other aspects of the present invention may be more fully understood by reference to the following examples.

EXAMPLE 1

This example compares a series of golf balls made in accordance with the present invention and a series of golf balls having a cover made from a cover stock using only lithium ionomer resin or sodium ionomer resin. The following ingredients are mixed to make cover stocks:

## Table 1

### Cover Stock (Amounts phr)

| Ingredients | A | B | C | D | E | F |
|---|---|---|---|---|---|---|
| Surlyn 8118 (Lithium) | 25 | 25 | 20 | 15 | - | 100 |
| Surlyn 8269 (Sodium) | 25 | - | - | - | - | - |
| Surlyn 8265 (Sodium) | 50 | 75 | 80 | 85 | 100 | - |
| Titanium Dioxide | 5 | 5 | 5 | 5 | 5 | 5 |
| Melt flows | 1.0* | 1.01* | 0.98* | 0.96* | 0.9 | 1.4 |

*calculated from the individual melt flows

The cover stocks were used to make half-shells in a conventional half-shell injection molding machine which heats the cover stock to 400°F (204°C) and injects the fluid cover stock into molds. The half-shells were formed about the solid cores in a compression mold at 260°-280°F (127°-138°C) for 10 minutes to yield golf balls with diameters of about 1.68 inches (4.3 cm) and nominal cover thicknesses of about 0.04 inches (0.1 cm).

Each series of balls made from the cover stocks were tested for initial velocity, hardness and cut resistance. The results from these tests were as follows:

## TABLE 2

| | A | B | C | D | E | F |
|---|---|---|---|---|---|---|
| Initial Velocity (ft/sec) | 247.45 | 247.54 | 247.26 | 247.02 | 246.41 | 251.32 |
| (m/sec) | 75.42 | 75.45 | 75.36 | 75.29 | 75.11 | 76.60 |
| Shore D Hardness | 54 | 58 | 56 | 55 | 50 | 69 |
| Cut Resistance (inches) | 23 | 23 | 23 | 22 | 21 | 29 |
| (cm) | 58 | 58 | 58 | 56 | 53 | 74 |

The balls were also tested for shear resistance by projecting the ball against a wall and then visually observing the amount of wear on the cover. From this visual inspection it was noted that the ball made with cover stock E had the highest shear resistance while the ball made from cover stock F had the lowest. The balls made from cover stocks A-D showed good shear resistance which approached the shear resistance of the ball made from cover stock E.

In the guillotine test, a knife edge of 8 pounds (3629 grams) was impacted against the golf ball from various heights under the force of gravity. Cut resistance was determined by the maximum height to which the knife blade could be raised without cutting the cover of the golf ball on impact. A cut was defined as penetration completely through the cover; a mere crease in the golf ball was not considered to be a cut for testing purposes. The higher the blade had to be raised to cut the cover, the more cut resistant the golf ball was.

Shore D hardness is measured in accordance with A.S.T.M. D 2240-86 durometer hardness.

Initial velocity is measured in a conventional manner.

It is evident from the results in Table 2 above that the golf ball cover of the present invention produces a faster ball and a more cut resistant ball than a soft sodium ionomer resin alone.

As will be appreciated by those of skill in the art, solid cores generally result in a golf ball that has a higher initial velocity than a golf ball with a wound core. It is preferred to use a solid core to obtain a golf ball with a higher initial velocity than a golf ball with a wound core.

It will be understood that each and every numerical value which appears in the claims herein is modified by the term "about" if the modifying term "about" does not appear in front of such numerical value.

It will be understood that the claims are intended to cover all changes and modifications of the preferred embodiments of the invention, herein chosen for the purpose of illustration, which do not constitute a departure from the spirit and scope of the invention.

## Claims

1. A golf ball comprising a core and a cover wherein said cover comprises a blend of a lithium ionomer resin and a sodium ionomer resin having a low flexural modulus.

2. The golf ball of claim 1 wherein said sodium ionomer resin has a flexural modulus of between about 1,000 and about 20,000 psi.

3. The golf ball of claim 1 wherein said blend is comprised of about 95 to about 50 phr of said sodium ionomer resin and about 5 to about 50 phr of said lithium ionomer resin.

4. The golf ball of claim 1 wherein said sodium ionomer resin is a copolymer of about 95 to about 80 parts by weight ethylene and about 5 to about 20 parts by weight acrylic or methacrylic acid based on 100 parts by weight of copolymer and about 10 to about 90% of the acid groups are neutralized by a sodium ion; and said lithium ionomer resin is a copolymer of about 95 to about 80 parts by weight ethylene and about 5 to about 20 parts by weight acrylic or methacrylic acid based on 100 parts by weight of copolymer and about 10 to about 90% of the acid groups are neutralized by a lithium ion.

5. The golf ball of claim 1 wherein said lithium ionomer resin has a flexural modulus of above about 60,000 psi.

6. The golf ball of claim 1 wherein said blend has a melt flow index between about 1 to about 4 g/10 min.

7. The golf ball of claim 1 wherein said sodium ionomer comprises a first and a second sodium ionomer and said first sodium ionomer has a different flexural modulus than said second sodium ionomer.

8. The golf ball of claim 1 wherein said sodium ionomer has a flexural modulus of between about 2,000 and about 10,000 psi.

9. The golf ball of claim 1 wherein said lithium ionomer resin has a flexural modulus between about 60,000 and about 70,000 psi.

10. In a golf ball having a core and a cover, the improvement comprising said cover being made from a blend of ionomer resins comprising:

about 95 to about 50 phr of a sodium ionomer resin, said sodium ionomer resin having a flexural modulus between about 1,000 and about 20,000 psi, said sodium ionomer resin being a copolymer of about 95 to about 80 parts by weight ethylene and about 5 to about 20 parts by weight acrylic or methacrylic acid based on 100 parts by weight of copolymer, said sodium ionomer resin having about 10 to about 90% of the acid groups neutralized by a sodium ion; and
about 5 to about 50 phr of a lithium ionomer resin, said lithium ionomer resin having a flexural modulus between about 60,000 and about 80,000 psi, said lithium ionomer resin being a copolymer of about 95 to about 80 parts by weight ethylene and about 5 to about 20 parts by weight acrylic or methacrylic acid based on 100 parts by weight of copolymer, said lithium ionomer resin having about 10 to about 90% of the acid group neutralized by a lithium ion.

EP 0 490 619 A1

European Patent Office

**EUROPEAN SEARCH REPORT**

Application Number

EP 91 31 1445

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,P | EP-A-0 443 706 (SUMITOMO RUBBER INDUSTRIES) * page 2, lines 25-40; page 3, lines 6-8,18-26; page 4, line 45 - page 5, line 10; claims 1,2 * --- | 1-10 | A 63 B 37/00 |
| Y | FR-A-2 625 909 (SPALDING & EVENFLO) * page 6, line 21 - page 7, line 29; page 8, lines 1-17; claims 1-6 *; & US - 4884814 (cat. D) --- | 1-10 | |
| Y,P | EP-A-0 407 049 (ACUSHNET) * page 3, lines 5-17,49-56; claims 1-8 * --- | 1,2,5-9 | |
| Y | GB-A-2 105 595 (QUESTOR) * page 1, lines 32-48; claim 1 * ----- | 1,2,5-9 | |
| | | | **TECHNICAL FIELDS SEARCHED (Int. Cl.5)** A 63 B |

The present search report has been drawn up for all claims

| Place of search | Date of completion of the search | Examiner |
|---|---|---|
| BERLIN | 16-09-1992 | MONNE E.M.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

7